# EUROPEAN PATENT SPECIFICATION

(11) **EP 4 395 041 B1**
(45) Date of publication and mention of the grant of the patent: **28.10.2026**
(21) Application number: 23863430.7
(22) Date of filing: 04.09.2023
(51) Int. Cl.: H01M 50/383, H01M 50/342, H01M 50/30

(54) **BATTERY PACK**
BATTERIEPACK
BLOC-BATTERIE

(30) Priority: 05.09.2022 KR 20220112016
(43) Date of publication of application: 03.07.2024
(73) Proprietor: LG Energy Solution, Ltd., Seoul 07335 (KR)
(72) Inventor: LEE, Jae Hyun, Daejeon 34122 (KR); SHIN, Ju Hwan, Daejeon 34122 (KR); LEE, Hyoung Suk, Daejeon 34122 (KR); CHOI, Jong Hwa, Daejeon 34122 (KR); HUR, Nam Hoon, Daejeon 34122 (KR)
(74) Representative: Plasseraud IP
(86) International application number: PCT/KR2023/013143
(87) International publication number: WO 2024/053956

(56) References cited:
- WO-A1-2021/221351
- CN-A- 112 751 121
- CN-A- 112 751 121
- KR-A- 20210 051 543
- KR-A- 20210 051 543
- KR-A- 20220 056 024
- US-A1- 2016 133 901
- US-A1- 2022 118 860
- US-B2- 10 446 817
- US-B2- 8 426 048

## Description

### [Technical Field]

The present invention relates to a battery pack for accommodating a battery module, and more particularly, to a battery pack capable of discharging flames generated therein to the outside in a controlled manner.

This application claims the benefit of priority based on Korean Patent Application No. 10-2022-0112016, filed on September 5, 2022.

### [Background Art]

A battery pack applied to electric vehicles, etc. has a structure in which a plurality of battery modules including a plurality of secondary batteries are connected in series or in parallel to obtain high power. WO 2021/221351 and CN 112 751 121 disclose an example of battery pack. The secondary batteries each include anode and cathode current collectors, a separator, an active material, an electrolyte, etc. and thus are repeatedly chargeable/dischargeable through an electrochemical reaction between the components thereof.

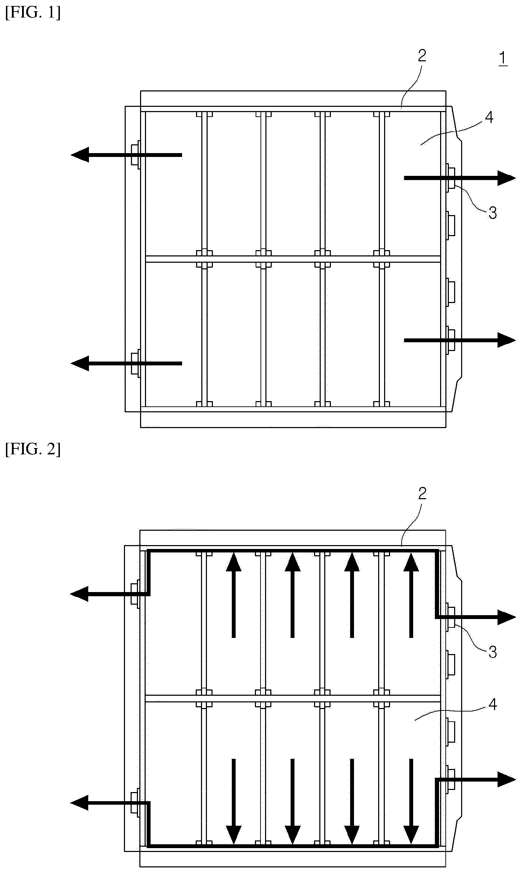

FIGS. 1 and 2 are schematic views of gas discharge paths in a battery pack 1 of the related art.

When a thermal runaway occurs in a battery module 4 in the battery pack 1, heat is transmitted to adjacent battery modules and thus a gas is generated and sparks or flames burst out in the battery pack.

The battery pack 1 is provided with a gas discharge path and gas discharge openings 3.

FIGS. 1 illustrates that a gas is directly discharged through the gas discharge openings 3 formed in a side wall 2 of the battery pack 1.

FIG. 2 illustrates that a gas is discharged to the outside through a venting channel and gas discharge openings 3 formed in a side wall 2 of the battery pack 1.

Meanwhile, flames are discharged through the venting channel and the gas discharge openings 3, as well as a gas. When flames are discharged directly to the outside of a battery pack without any regulations, mechanical or electrical devices outside the battery pack may be damaged. In addition, fires or explosions may be caused by flames discharged to the outside, thus decreasing safety.

To regulate flames, a mesh-shaped member may be mounted in the gas discharge openings. In this case, flames can be reduced to some extent by the mesh-shaped member. However, a flame suppression effect using the mesh-shaped member is limited and it is difficult to completely prevent flames.

Meanwhile, flames may be prevented by forming a flame blocking plate inside gas discharge openings, i.e., inside a battery pack. In this case, flames can be prevented from being discharged to the outside of the battery pack. However, the flame blocking plate may interfere with the flow of a gas to be discharged to the outside and thus the gas may not be discharged to the outside quickly. Moreover, flames that are not discharged to the outside may spread to the inside of the battery pack and finally to other battery modules in which flames are not generated, and thus a problem of so-called thermal propagation may become more serious.

Therefore, it is necessary to develop a technique for effectively discharging flames generated inside a battery pack in a controlled manner, thereby solving problems occurring inside and outside the battery pack.

### [Related Art Literature]

### [Patent Document]

Korean Patent Application Publication No. 10-2018-0039986

### [Disclosure]

### [Technical Problem]

To address the above-described problem, the present invention is directed to providing a battery pack capable of reducing and discharging flames generated therein to the outside in a controlled manner.

### [Technical Solution]

A battery pack according to an embodiment of the present invention includes: a lower case accommodating a plurality of battery modules therein; an upper case coupled to the lower case while covering the lower case; venting holes provided in at least one of a side wall of the lower case and the upper case; a sealing member installed on at least one of the side wall of the lower case and the upper case to cover the venting holes, and configured to be deformed under predetermined pressure and/or at a predetermined temperature or higher to open the venting holes; and a flame control block mounted on at least one of an inner surface of the side wall of the lower case and an inner surface of the upper case to cover the venting holes and the sealing member, and including a flame blocking surface with a plurality of flame discharge holes and an inner space that communicates with the flame discharge holes and that is open toward the venting holes and the sealing member, wherein the sealing member is a sheet type member.

According to the invention, the battery pack further includes a mesh-shaped flame extinction member installed in venting holes in front of or in the rear of the sealing member.

The flame control block may include a protruding frame protruding toward the inside of the battery pack while surrounding the venting holes and the sealing member, in which a protruding surface of the protruding frame may form the flame blocking surface, and the inner space may be provided among an inner surface of the protruding frame, the venting holes, and the sealing member.

A mounting bracket may be provided on an end of the protruding frame opposite to the flame blocking surface. The mounting bracket may be mounted on at least one of the inner surface of the side wall of the lower case and the inner surface of the upper case.

A gas inlet may be provided at a corner of the protruding frame.

The flame blocking surface of the protruding frame may be formed to be concave toward the outside of the battery pack.

A diameter of a flame discharge hole at a center of the flame blocking surface may be less than those of flame discharge holes at both sides of the flame blocking surface.

The flame blocking surface of the protruding frame may include a flat part, and inclined parts provided at both sides of the flat part and inclined toward the inside of the battery pack from the flat part.

A diameter of a flame discharge hole in the flat part may be less than those of flame discharge holes in the inclined parts.

In an embodiment, the battery pack may further include a venting device mounted on at least one of outer sides of the side wall of the lower case and the upper case while covering the venting holes. The venting device may include a housing provided with a hollow venting channel communicating with the venting holes, and a mesh-shaped flame extinction member coupled to an entrance of the hollow venting channel communicating with the venting holes.

The sealing member may be installed in the hollow venting channel of the housing.

The flame control block may further include at least one partition frame including flame discharge holes communicating with the flame discharge holes in the flame blocking surface, configured to partition the inner space, and installed in the protruding frame.

The flame discharge holes in the at least one partition frame may be provided to overlap at least some of the flame discharge holes in the flame blocking surface.

The flame blocking surface of the protruding frame and the at least one partition frame may be formed to be concave toward the outside of the battery pack, and a diameter of the flame discharge hole at the center of the flame blocking surface and a diameter of a flame discharge hole at a center of the at least one partition frame may be less than that of the flame discharge holes in both sides of the flame blocking surface and that of flame discharge holes at both sides of the at least one partition frame, respectively.

Each of the flame blocking surface of the protruding frame and the at least one partition frame may include a flat part, and inclined parts positioned at both sides of the flat part and inclined toward the inside of the battery pack from the flat part, and a diameter of a flame discharge hole in the flat part may be less than those of flame discharge holes in the inclined parts.

### [Advantageous Effects]

According to the present invention, a flame control block is provided on an inner surface of a pack case to discharge flames to the outside in a controlled manner.

Accordingly, flames can be put out to a predetermined degree and discharged to the outside without being straightly discharged to the outside, thereby improving the safety of the outside of a battery pack.

In addition, flames can be prevented from staying inside a battery pack and spreading to other battery modules.

### [Brief Description of the Drawings]

FIGS. 1 and 2 are schematic views of gas discharge paths in a battery pack of the related art.

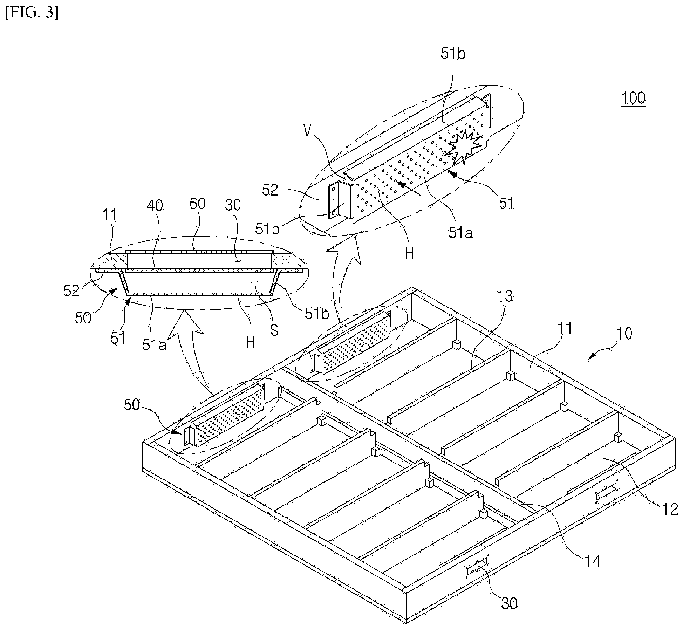

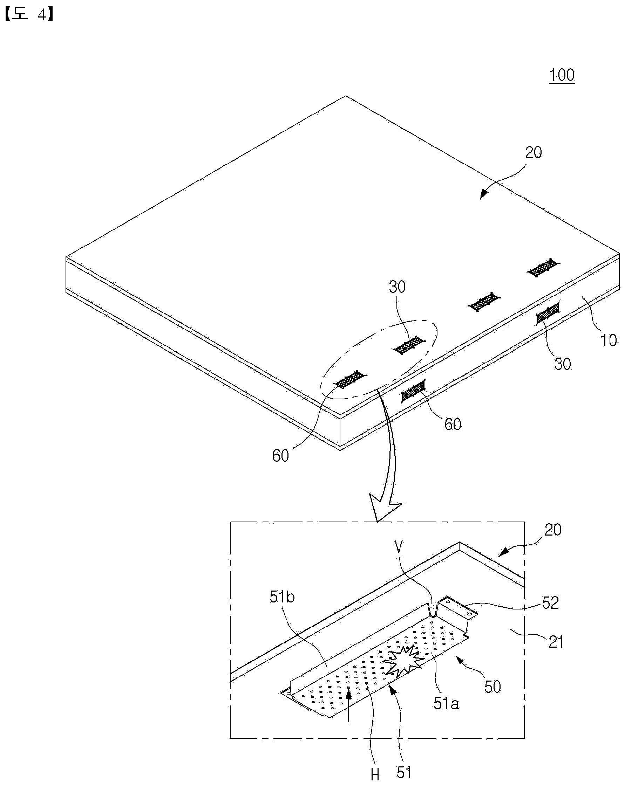

FIGS. 3 and 4 are schematic perspective views of a battery pack according to an embodiment of the present invention.

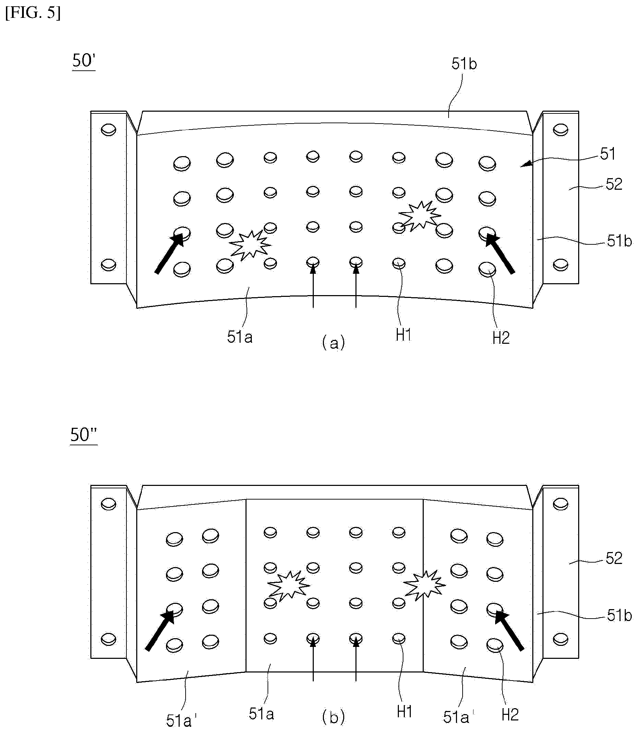

FIG. 5 is a schematic view of other examples of a flame control block.

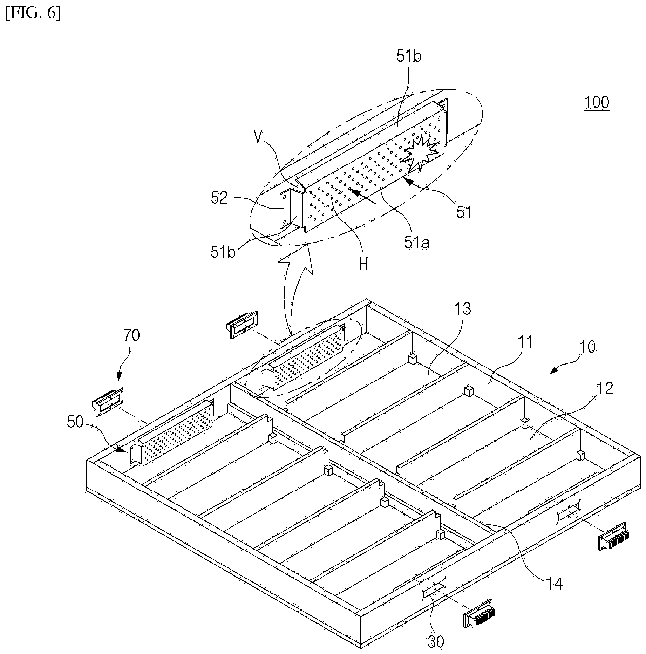

FIG. 6 is a schematic view of a battery pack according to an embodiment of the present invention.

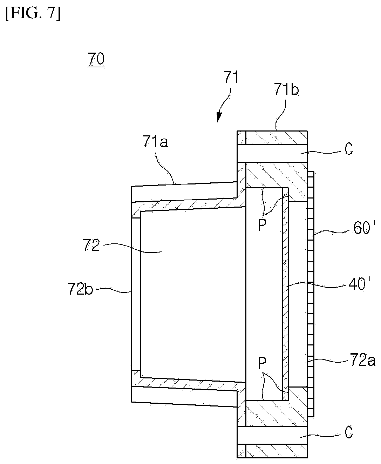

FIG. 7 is a side cross-sectional view of a venting device that is a component of a battery pack of the present invention.

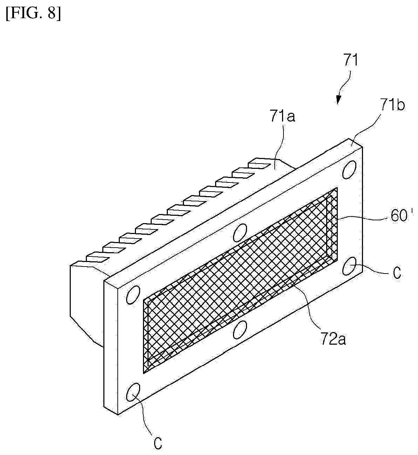

FIG. 8 is a rear perspective view of a venting device.

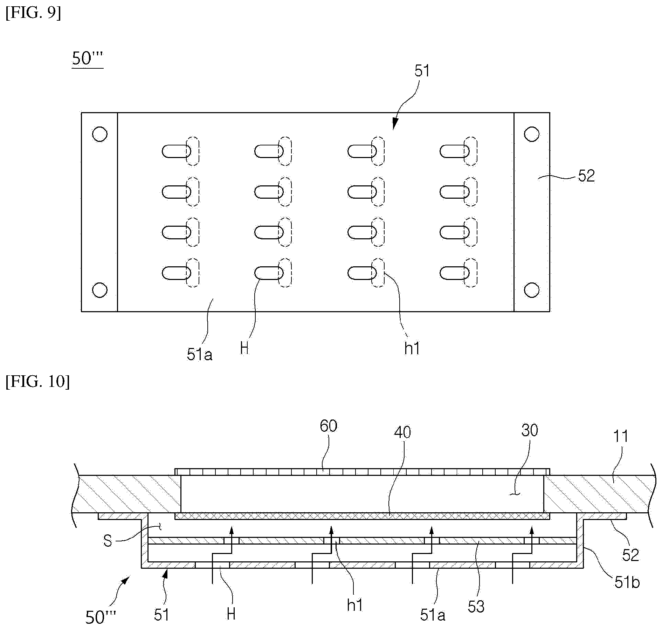

FIGS. 9 and 10 are a front view and a cross-sectional view of another example of a flame control block.

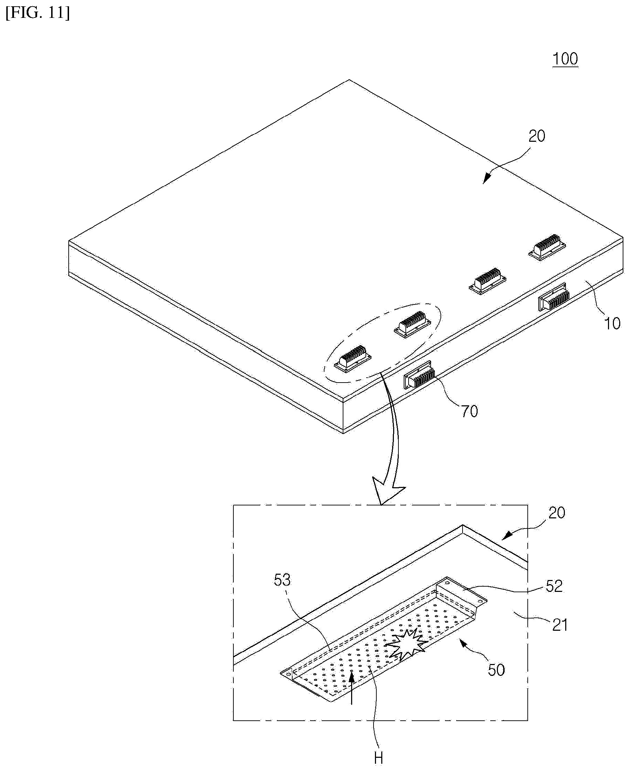

FIG. 11 is a schematic view of a battery pack to which the flame control block of FIGS. 9 and 10 is applied.

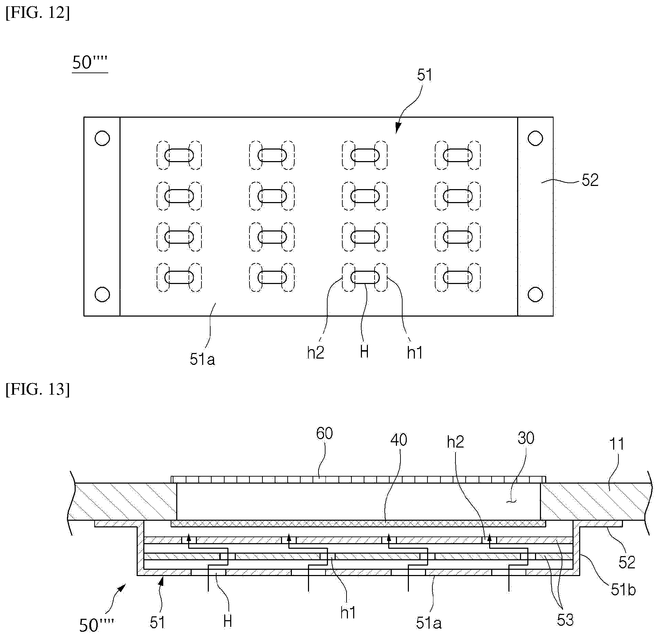

FIGS. 12 and 13 are a front view and a cross-sectional view of another example of a flame control block.

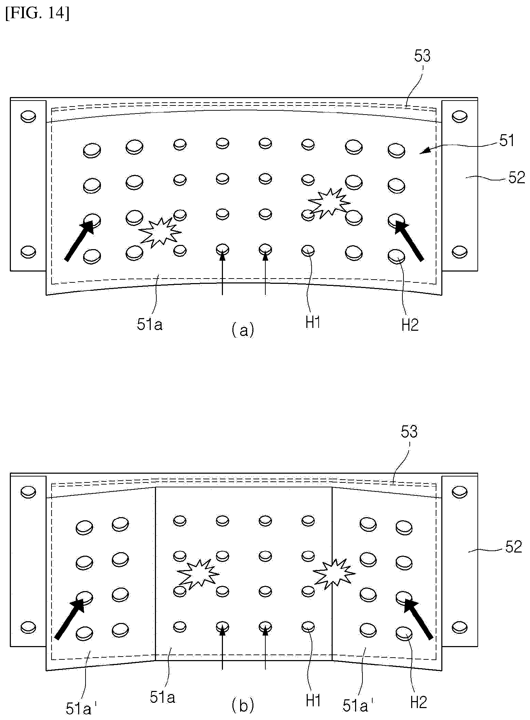

FIG. 14 is a schematic view of other examples of a flame control block.

### [Best Mode]

The present invention will become more apparent by describing exemplary embodiments thereof in detail with reference to the accompanying drawings. Embodiments described below are provided as examples to help understand the present invention, and it should be understood that the present invention may be implemented in various forms different from the embodiments. To help understand the present invention, the accompanying drawings may not be shown in an actual scale but the sizes of some components may be exaggerated.

A battery pack according to an embodiment of the present invention includes: a lower case accommodating a plurality of battery modules therein; an upper case coupled to the lower case while covering the lower case; venting holes provided in at least one of a side wall of the lower case and the upper case; a sealing member installed on at least one of the side wall of the lower case and the upper case to cover the venting holes, and configured to be deformed under predetermined pressure and/or at a predetermined temperature or higher to open the venting holes; and a flame control block mounted on at least one of an inner surface of the side wall of the lower case and an inner surface of the upper case to cover the venting holes and the sealing member, and including a flame blocking surface with a plurality of flame discharge holes and an inner space that communicates with the flame discharge holes and that is open toward the venting holes and the sealing member.

### [Embodiments of the Present Invention]

Hereinafter, the present invention will be described in detail.

### (First Embodiment)

FIGS. 3 and 4 are schematic perspective views of a battery pack according to an embodiment of the present invention.

A battery pack 100 according to the present invention includes: a lower case 10 accommodating a plurality of battery modules therein; an upper case 20 coupled to the lower case 10 while covering the lower case 10; venting holes 30 provided in at least one of a side wall 11 of the lower case 10 and the upper case 20; a sealing member 40 installed on at least one of the side wall 11 of the lower case 10 and the upper case 20 to cover the venting holes 30, and configured to be deformed under predetermined pressure and/or a predetermined temperature or higher to open the venting holes 30; and a flame control block 50 mounted on at least one of an inner surface of the side wall 11 of the lower case 10 and an inner surface 21 of the upper case 20 to cover the venting holes 30 and the sealing member 40, and including a flame blocking surface 51a with a plurality of flame discharge holes H and an inner space S that communicates with the flame discharge holes H and that is open toward the venting holes 30 and the sealing member 40.

The present invention relates to the battery pack 100 for accommodating a plurality of battery modules (not shown). When flames are generated in one of the plurality of battery modules, the flames may be discharged in a controlled manner by the flame control block 50 of the present invention, thereby suppressing the propagation of the flames to the other battery modules. The battery modules each include a battery cell stack in which a plurality of battery cells are stacked, and a module housing in which the battery cell stack is accommodated. The battery module further includes end plates coupled to front and rear ends of the battery cell stack. Battery modules applicable to the present invention include a battery module having a moduless structure in which part of or an entire module housing accommodating a battery cell stack therein is omitted. By installing the battery module having the moduless structure in the battery pack 100, the battery pack 100 having a so-called cell-to-pack structure may be achieved. Accordingly, the present invention is also effective in preventing the propagation of heat or flames in the battery pack 100 having the cell-to-pack structure.

The lower case 10 accommodates a plurality of battery modules therein. Generally, the lower case 10 includes a base plate 12 forming a battery module mounting area and a side wall 11 surrounding the base plate 12. The base plate 12 may include a refrigerant flow path or a separate heat sink may be installed under the base plate 12. An assembly of the base plate 12 and the side wall 11 is the lower case 10. A gas venting channel may be provided in the side wall 11. Venting holes 30 for discharging a gas generated in the battery pack 100 to the outside may be formed at points on the side wall 11. The gas venting channel may communicate with the venting holes 30.

Partition members 13 may be provided to align the plurality of battery modules in the lower case 10. That is, the battery module mounting area is divided into a plurality of parts by the partition members 13, and each of the battery modules is accommodated on one of the parts between the partition members 13. The partition members 13 are fixedly installed on the battery module mounting area, i.e., the base plate 12.

A center frame 14 may be installed in the lower case 10 in addition to the partition member 13. The center frame 14 extends to cross the battery module mounting area. A plurality of partition members 13 may be arranged on both sides of the center of the center frame 14. By providing the center frame 14, the battery modules on the left and right sides of the center frame 14 may be spaced apart from each other to be electrically insulated. The center frame 14 and the battery modules may be spaced a predetermined insulation distance from each other.

The upper case 20 is coupled to the lower case 10 while covering the lower case 10. As shown in FIG. 4, the upper case 20 is coupled to the lower case 10 to form a pack case. A gas venting channel may be also provided inside the upper case 20. In addition, a venting hole 30 may be provided at a predetermined position on the upper case 20 to discharge a gas generated in the battery pack 100 to the outside, and the gas venting channel may communicate with the venting hole 30.

As described above, the venting hole 30 is provided in at least one of the side wall 11 of the lower case 10 and the upper case 20. That is, as shown in FIG. 3, the venting hole 30 may be provided in the side wall 11 of the lower case 10. Alternatively, as shown in FIG. 4, the venting hole 30 may be provided in the upper case 20 or both the side wall 11 of the lower case 10 and the upper case 20. Therefore, according to the present invention, a gas and flames generated inside the battery pack 100 may be discharged to the outside through the side wall 11 of the lower case 10, the upper case 20, or both the side wall 11 of the lower case 10 and the upper case 20.

A plurality of venting holes 30 may be provided. In addition, the plurality of venting holes 30 may be provided along the side wall 11 of the lower case 10 or the upper case 20 to be spaced a predetermined distance from each other. For example, the venting holes 30 may be provided in both side walls 11 of the lower case 10 according to a direction in which the battery modules are disposed in the pack case, as shown in FIG. 3. Alternatively, the venting holes 30 may be provided in all four side walls of the lower case 10. In addition, the venting holes 30 may be provided at intervals in a longitudinal direction of the upper case 20. FIG. 4 illustrates an example in which a plurality of venting holes 30 are provided in the upper case 20 and the side wall 11 of the lower case 10 to be spaced apart from each other. Positions, sizes, a total number, and installation intervals of the venting holes 30 may be appropriately determined to easily discharge a gas and flames in the battery pack 100.

The sealing member 40 may be installed on at least one of the side wall 11 of the lower case 10 and the upper case 20 according to the installation positions of the venting holes 30. The sealing member 40 is installed to cover the venting holes 30 to maintain airtightness in a general operation state of the battery pack 100 in which no flames are generated. The sealing member 40 deforms under predetermined pressure and/or at a predetermined temperature or higher to open the venting holes 30.

The sealing member 40 is a sheet type member. For example, the sealing member 40 may be a rupture sheet configured to rupture when the pressure of a gas is greater than or equal to a predetermined pressure. Alternatively, the sealing member 40 may be formed of a material that melts at a predetermined temperature or higher to open the venting holes 30. For example, the sealing member 40 of a sheet type may be manufactured using a film or foam material vulnerable to high temperatures. Deformation conditions of the sealing member 40 may be specified such that the sealing member 40 ruptures or melts to open the venting holes 30 when a pressure condition, a temperature condition or both of them are satisfied.

The sealing member 40 may be installed to cover the inside or outside of the venting holes 30. That is, the sealing member 40 may be coupled to the lower case 10 or an inner surface 21 of the upper case 20 in which the venting holes 30 are formed to cover the venting holes 30 or be coupled to the lower case 10 or an outer side of the upper case 20 to cover the venting holes 30. Alternatively, as described below, when a venting device is installed in the venting holes 30, the sealing member 40 may be installed in the venting device rather than the pack case. In this case, the venting holes 30 should also be covered with the sealing member 40 to implement a sealing function.

The sealing member 40 may be provided in a predetermined length along the side wall 11 or the upper case 20 and a size covering all of the venting holes 30.

A mesh-shaped flame extinction member 60 is installed in venting holes 30 in a front or rear surface of the sealing member 40.

Referring to FIG. 3, the sealing member 40 and the mesh-shaped flame extinction member 60 are not shown in venting holes 30 in a front side wall of the lower case 10 for convenience of description. However, actually, the sealing member 40 and the mesh-shaped anti-flame member 60 may be installed in these venting holes 30. Both these members are illustrated as being installed on a rear side wall opposite to the front side wall. Referring to an enlarged view of a main part of FIG. 3, the sealing member 40 is installed inside the venting hole 30, and the mesh-shaped flame extinction member 60 is installed opposite to the sealing member 40, i.e., an outer side of the venting hole 30. However, the sealing member 40 may be installed on the outside of the venting hole 30 and the mesh-shaped flame extinction member 60 may be installed inside the venting hole 30. As described below, when a venting device is installed in the venting hole 30, the mesh-shaped flame extinction member 60 may be installed on the venting device. The mesh-shaped flame extinction member 60 may be in a mesh form, and guide and discharge flames. Accordingly, flames in the battery pack 100 may be prevented from being directly and strongly discharged to the outside.

However, when flames are very strong, a large amount of flames may be discharged through the mesh-shaped flame extinction member 60, thus causing a risk of fire or explosion. That is, as described above, a flame suppression effect using the mesh-shaped flame extinction member 60 is limited and it is difficult to completely prevent flames.

According to the present invention, the flame control block 50 is provided to discharge flames in the battery pack 100 in a controlled manner. The flame control block 50 is mounted on at least one of an inner surface and the side wall 11 of the lower case 10 and the inner surface 21 of the upper case 20 to cover the venting holes 30 and the sealing member 40. FIG. 3 illustrates an example in which the flame control block 50 is installed on the inner surface of the side wall 11 of the lower case 10 and FIG. 4 illustrates an example in which the flame control block 50 is installed the inner surface 21 of the upper case 20, but the flame control block50 may be installed on both the inner surface of the side wall 11 of the lower case 10 and the inner surface 21 of the upper case 20.

The flame control block 50 includes the flame blocking surface 51a with a plurality of flame discharge holes H. The flame control block 50 further includes the inner space S that communicates with the flame discharge holes H and that is open toward the venting holes 30 and the sealing member 40.

Flames move forward and thus most thereof are directed to the flame blocking surface 51a of the flame control block 50. When the flame control block 50 is not provided, flames may be immediately directed to the sealing member 40 and the venting holes 30, thus causing the above-described safety problem. However, in the present invention, the flame control block 50 is provided, and thus, some flames may be blocked due to the flame blocking surface 51a not to be immediately directed to the venting holes 30, thereby preventing the above-described problem. The flame blocking surface 51a is not completely blocked but is provided with a plurality of flame discharge holes H. Accordingly, flames blocked and congested by the flame blocking surface 51a are introduced into the inner space S of the flame control block 50 through the flame discharge holes H. Accordingly, the flames may be prevented from being propagated to other battery modules.

The amount, speed, etc. of flames to be introduced into the inner space S of the flame control block 50 may be adjusted by adjusting the area of the flame blocking surface 51a, the number, size, and positions of the flame discharge holes H, etc. Therefore, the amount, speed, etc. of flames generated in the battery pack 100 may adjusted by the flame control block 50 to discharge the flames to the outside of the battery pack 100. The flame control block 50 includes the inner space S that communicates with the flame discharge holes H and that is open toward the venting holes 30 and the sealing member 40. That is, the inner space S of a predetermined volume is formed between the flame blocking surface 51a and the venting holes 30. A residence time, etc. of flames in the inner space S may be adjusted according to the volume of the inner space S. In addition, the amount, speed, residence time, etc. of flames to be discharged to the outside of the battery pack 100 may be controlled by adjusting the area of the flame blocking surface 51a, the number, size and positions of flame discharge holes H, and the volume of the inner space S. Thus, the flames are discharged to the outside of the battery pack 100 in a controlled manner through the flame control block 50. Most of the flames may be dissipated in the above process. Therefore, the amount of flames or sparks to be discharged through the venting holes 30 and/or the mesh-shaped flame extinction member 60 may be greatly reduced. Accordingly, actually, no flames or only a very small amount of flames are in contact with the mesh-shaped flame extinction member 60, thus preventing damage to the mesh-shaped flame extinction member 60. Even when flames are generated in the battery pack 100, the flame control block 50 of the present invention is capable of managing a level of flames to be discharged to the outside of the battery pack 100 to be very low while preventing the flames from being propagated to other battery modules. Therefore, the safety of the inside and outside of the battery pack 100 can be greatly improved.

As shown in FIGS. 3 and 4, the flame control block 50 includes a protruding frame 51 protruding toward the inside of the battery pack 100 while surrounding the venting holes 30 and the sealing member 40. A protruding surface of the protruding frame 51 forms the flame blocking surface 51a. A plurality of flame discharge holes H having a predetermined diameter are provided in the protruding surface to be spaced apart from each other. The inner space S is formed among an inner surface of the protruding frame 51, the venting holes 30, and the sealing member 40.

The protruding frame 51 is in a form completely surrounding and covering the venting holes 30. Therefore, flames are prevented from entering a side surface 51b of the protruding frame 51 excluding the protruding surface. Flames move forward and thus most thereof are directed to the flame blocking surface 51a. However, a very small amount of flames may be directed to the side surface 51b of the protruding frame 51 according to a flame occurrence situation. In addition, part of flames may be directed to the side surface 51b by being transferred through the flow of a gas generated together with the flames. The protruding frame 51 completely surrounds and covers the venting holes 30 to prevent part of flames from entering the flame control block 50.

A diameter of the flame discharge holes H in the flame blocking surface 51a may be greater or less than the size of meshes of the mesh-shaped flame extinction member 60. When the diameter of the flame discharge holes H is greater than the size of the meshes, a considerable amount of flames may be primarily removed by the flame control block 50, and the remaining flames may be secondarily removed by the mesh-shaped flame extinction member 60. Alternatively, the diameter of the flame discharge holes H may be set to be less than the size of the meshes when necessary. In this case, it is advantageous in terms of suppress an initial speed of flames and controlling the flames to stay relatively long in the inner space S.

The flame control block 50 may be mounted on at least one of an inner surface of the side wall of the lower case and an inner surface of the upper case through a mounting bracket 52. For example, the mounting bracket 52 may be provided on an end opposite to the flame blocking surface 51a (protrusion surface) of the protruding frame 51. The mounting bracket 52 may be brought into close contact with the inner surface of the side wall of the lower case and the inner surface 21 of the upper case and may be fixedly coupled thereto by welding, a fastening member, or other methods.

A gas inlet V may be provided at a corner of the protruding frame 51. A gas generated in the battery pack 100 in a thermal runaway situation is discharged to the outside through a separate venting opening or venting path in a battery pack 100. In addition, the gas may be partially discharged through the flame discharge holes H in the flame control block 50. However, there are cases in which the pressure of gas in the battery pack 100 is excessively high and thus should be lowered more quickly. To this end, the gas inlet V may be provided at the corner of the protruding frame 51. The gas inlet V allows a gas to be discharged to the venting holes 30 through the inner space S of the protruding frame 51. Because the gas inlet V is formed to be small at the corner of the protruding frame 51, it is difficult for flames to reach the corner when the forward movement of flames is considered. On the other hand, a gas may reach the corner when pressure is applied thereto. Therefore, the present invention is advantageous in that when a thermal runaway situation occurs in the battery pack 100, an excessive pressure of gas can be reduced while controlling flames by the flame control block 50.

The protruding frame 51 may be formed of a material proof against flames, e.g., a high-melting-point metal. For example, steel, stainless steel, other high-melting-point metals, or an alloy thereof may be used. If necessary, a fire-resistant plastic material or the like having high insulation properties and a high melting point may be used.

Because the flame control block 50 of the present invention may be installed not only on the side wall 11 of the lower case 10 but also on the upper case 20, flames may be quickly reduced and discharged through side and upper surfaces of the battery pack 100 when the flames are generated. As described above, a thermal runaway situation can be quickly resolved, thus reducing a time required for the propagation of flames to other battery modules. Accordingly, safety can be greatly improved in the thermal runaway situation.

### (Second Embodiment)

FIG. 5 is a schematic view of other examples of a flame control block.

Flame blocking surfaces 51A of flame control blocks 50' and 50" of the present embodiment have concave surfaces or surfaces with different slopes other than a flat surface.

A flame blocking surface 51a of a protruding frame 51 of (a) of FIG. 5 is formed to be concave toward the outside of the battery pack 100. That is, a center of the flame blocking surface 51a is a concave surface that converges toward the outside of the battery pack 100. The flame blocking surface 51a that is the concave surface allows flames to be easily focused. That is, it is easy to collect flames toward the center of the flame blocking surface 51a compared to when the flame blocking surface 51a is a flat surface.

In addition, flame collection efficiency may be increased by setting diameters of flame discharge holes H to be different from each other. For example, as shown in (a) of FIG. 5, a diameter of a flame discharge hole H1 at the center of the flame blocking surface 51a that is the concave surface may be set to be less than those of flame discharge holes H2 at both sides of the flame blocking surface 51a. Part of flames are blocked by the flame blocking surface 51a in which the flame discharge holes H are not formed. The blocked flames are directed to the flame discharge holes H. In this case, the flame blocking surface 51a is concave and thus flames may be easily guided toward the center of the concave surface. Because flames are likely to move forward, a large amount of flames may flow into the flame discharge hole H1 even when the flame discharge hole H1 is formed to have a small diameter at the center of the flame blocking surface 51a. Meanwhile, the diameters of the flame discharge holes H2 at both sides of the flame blocking surface 51a may be set to be large, when it is considered that flames directed to both sides of the flame blocking surface 51a are introduced in a diagonal direction and the amount of flames introduced in the diagonal direction is relatively small. Accordingly, the flames introduced in the diagonal direction may be easily introduced to both sides of the flame blocking surfaces 51a.

A flame blocking surface 51a of a protruding frame 51 of (b) of FIG. 5 includes a flat part 51a and inclined parts 51a' positioned at both sides of the flat part and inclined toward the inside of the battery pack 100 from the flat part 51a.

Similar to the flame blocking surface 51a of (a) of FIG. 5, the flame blocking surface 51a of (b) of FIG. 5 is in a form that facilitates the focusing of flames toward the center of the flame blocking surface 51a. The inclined surface 51a' is inclined at a predetermined angle toward the inside of the battery pack 100. Therefore, flames heading in the diagonal direction may be easily guided to the inner space S along the inclined surface 51a'. In addition, a diameter of a flame discharge hole H1 in the flat part may be set to be less than those of flame discharge holes H2 in the inclined surface 51a'. Therefore, flames that are likely to move forward may easily enter the inner space S of the flame control block 50 through the flame discharge hole H1 with a small diameter in the flat part 51a at the center. In addition, flames heading in the diagonal direction may easily enter the inner space S of the flame control block 50 through the flame discharge holes H2 with a large diameter in the inclined parts 51a' at both sides of the flat part.

As described above, in the flame control block 50 of the present embodiment or the battery pack 100 including the flame control block 50, flames may be easily induced to the inner space S of the flame control block 50 by adjusting a shape of the flame blocking surface 51a and the diameters of the flame discharge holes H. In this case, a concentration speed of flames toward the flame blocking surface 51a may be controlled by changing a curvature of the concave surface or an inclination of the inclined surface. When the curvature of the concave surface and the inclination of the inclined surface are changed, the volume of the inner space S may also change. Accordingly, a residence time of flames in the inner space S may also be adjusted.

In the present embodiment, the diameters of the flame discharge holes H vary according to positions on the flame blocking surface 51a but the number of the flame discharge holes H may be changed as necessary. That is, the same effect can be achieved by setting the number of flame discharge holes H2 in both sides (or inclined parts at both sides) of the flame blocking surface 51a to be greater than that of flame discharge holes H1 in a central part (or a flat part of the central part) of the flame blocking surface 51a.

### (Third Embodiment)

FIG. 6 is a schematic view of a battery pack 100 according to an embodiment of the present invention. FIG. 7 is a side cross-sectional view of a venting device 70 that is a component of the battery pack 100 of the present invention. FIG. 8 is a rear perspective view of the venting device 70.

In the battery pack 100 of the present embodiment, a venting device 70 that is a dedicated component for venting a gas and flames is installed in venting holes 30.

That is, the battery pack 100 of the present embodiment further includes the venting device 70 mounted on at least one outer side among the side wall 11 of the lower case 10 and the upper case 20 while covering the venting holes 30.

Referring to FIGS. 7 and 8, the venting device 70 may include a housing 71 with a hollow venting channel 72 communicating with the venting holes 30, and a mesh-shaped flame extinction member 60' coupled to an entrance 72a of the hollow venting channel 72 communicating with the venting holes 30. A side surface (rear surface) of the venting device 70 on which the mesh-shaped flame extinction member 60' is mounted may be mounted on an outer surface of the side wall 11 of the lower case 10 or an outer surface of the upper case 20.

Although FIG. 6 illustrates an example in which the venting device 70 is mounted on the side wall 11 of the lower case 10, the venting device 70 may be mounted on the outer surface of the upper case 20 as shown in FIG. 11 to be described below.

A plurality of venting devices 70 may be installed to be spaced a predetermined distance from each other to correspond to the number and installation intervals of the venting holes 30.

In addition, the sealing member 40 covering the venting holes 30 may be installed in the hollow venting channel of the housing rather than being directly installed in the venting holes 30. That is, the venting device 70 may be manufactured as a separate dedicated component for venting the battery pack 100 by installing a sealing member 40' and the mesh-shaped flame extinction member 60' on the venting device 70. In this case, the lower case 10 and the upper case 20 of the battery pack 100 may be separately manufactured to include only the venting holes 30, and the mesh-shaped flame extinction member 60 and the sealing member 40 need not be installed in the venting holes 30. Instead, the venting device 70 may be separately manufactured to be a dedicated component and be modularized, thereby increasing manufacturing efficiency of the battery pack 100. In this case, the sealing of the battery pack 100 may be easily performed by separately manufacturing the pack case and the venting device 70 and combining the pack case with the venting holes 30 in the pack case. In addition, only the venting device 70 when damaged due to flames may be removed and a new venting device 70 may be combined with the battery pack 100, thereby increasing reuse efficiency. In this case, the flame control block 50 may also be manufactured as a separate component. Accordingly, the venting device 70 and the flame control block 50 may be componentized and standardized, and the battery pack 100 of the present invention capable of preventing the propagation of flames may be easily manufactured by combining these separate components with the pack case.

The housing 71 of the venting device 70 may include a large diameter part 71b mounted on the pack case and a small diameter part 71a extending from the large diameter part 71b. The hollow venting channel 72 passes through the small diameter part 71a and the large diameter part 71b. A venting outlet 72b communicating with the hollow venting channel 72 is positioned at a front end of the small diameter part 71a. The sealing member 40' may be mounted on the large diameter part 71b. To this end, a stepped portion P on which the sealing member 40' may be mounted is formed on an inner surface of the large diameter part 71b forming the hollow venting channel. The sealing member 40' may be attached to the stepped portion P. A fastening member insertion hole C may be formed around the large diameter part 71b to mount the large diameter part 71b in the pack case. The mesh-shaped flame extinction member 60' may be attached to a rear surface of the large diameter part 71b. The venting device 70 may be mounted on an outer surface of the pack case such that the sealing member 40' and the mesh-shaped flame extinction member 60' cover the venting holes 30 formed in the pack case (the lower case 10 and the upper case 20).

### (Fourth Embodiment)

FIGS. 9 and 10 are a front view and a cross-sectional view of another example of a flame control block. FIG. 11 is a schematic view of a battery pack 100 to which the flame control block of FIGS. 9 and 10 is applied. FIGS. 12 and 13 are a front view and a cross-sectional view of another example of a flame control block.

Flame control blocks 50‴ and 50ʺʺ of the present embodiment each include at least one partition frame 53 that partitions the inner space S in the protruding frame 51. The partition frame 53 includes flame discharge holes (second flame discharge holes h1 and third flame discharge holes h2) that communicate with the flame discharge holes H (first flame discharge holes H) of the flame blocking surface 51a. Referring to FIG. 10, flames pass through the first flame discharge holes H of the flame blocking surface 51a and flow into the inner space S of the flame control block 50, pass through the second flame discharge holes h1 of the partition frame 53 and flow into the inner space S behind the partition frame 53, and thereafter head toward the sealing member 40 and the venting holes 30. When the sealing member 40 is melted or damaged, the flames may be discharged to the outside through the venting holes 30. The flames is cooled while moving along the above path of progress, and most thereof is extinguished in this process. Therefore, most of the flames may be removed at a position at which the mesh-shaped flame extinction member 60 is installed or only a very small amount of flames may be discharged to the outside of the pack case through the mesh-shaped flame extinction member 60.

In the present embodiment, a moving path of flames is increased by installing the partition frame 53 that partitions the inner space S, thereby maximizing a flame removal effect. FIG. 10 illustrates an example in which one partition frame 53 is installed in the inner space S, and FIG. 13 illustrates an example in which two partition frames 53 are installed in the inner space S. In theory, as the number of partition frames 53 increases, the moving path of flames increases, thus maximizing a flame extinction effect. However, the number of partition frames 53 to be installed in the inner space S may be limited when an installation space inside the battery pack 100, the size of the flame control block 50, and the like are considered.

FIG. 11 illustrates that the flame control block 50 with the partition frame 53 is mounted on an inner surface of an upper case.

When the partition frame 53 is installed in the protruding frame 51, the rigidity of the flame control block 50 may improve. In this case, the moving path of flames may be further increased when the first flame discharge holes H of the protruding frame 51 and the second flame discharge holes h1 of the partition frame 53 are provided to be misaligned. However, because flames are likely to move forward, when the first and second flame discharge holes H and h1 are misaligned not to overlap each other, flames passing through the first flame discharge holes H may be prevented from passing through the second flame discharge holes h1 and thus may collide against a surface of the partition frame 53 and stay in the inner space S. Because the fluidity of a gas is high, the gas may be easily discharged along a discharge path formed by the first and second flame discharge holes H and h1. However, flames that are likely to move forward are not highly likely to move forward along the discharge path.

Therefore, in the present embodiment, the second flame discharge holes h1 of the partition frame 53 are provided to overlap at least part of the flame discharge holes H of the flame blocking surface 51a in consideration of the forward movement of the flames.

Referring to FIGS. 9 and 10, the first flame discharge holes H are long holes formed horizontally, and the second flame discharge holes h1 are long hole formed vertically to each overlap a side of one of the first flame discharge holes H. Accordingly, flames passing through the first flame discharge holes H in a vertical direction or a part of the flames may move forward through the second flame discharge holes h1. Accordingly, a considerable amount of flame may be guided to the venting holes 30 more quickly. Flams entering the first flame discharge holes H that do not overlap the second flame discharge holes h1 may stay relatively long in the inner space S.

Referring to FIGS. 12 and 13, two partition frames 53 are installed in the inner space S of the flame control block 50. Flame discharge hole in the first partition frame 53 will be referred to as second flame discharge holes h1, and flame discharge holes in the second partition frame 53 will be referred to as third flame discharge holes h2.

In this case, the second and third flame discharge holes h1 and h2 are provided to overlap at least some of the flame discharge holes H (first flame discharge holes) in the flame blocking surface 51a. Because the at least some of the first flame discharge holes H overlap the second flame discharge holes h1, flames that are likely to move forward may be easily induced toward the venting holes 30. Flames entering a part that does not overlap the first flame discharge holes H pass through the inner space S along a longer path.

At least some of the second and third flame discharge holes h1 and h2 may also be provided to overlap each other as necessary.

Flames can be induced to the flame control block 50 in a more minutely controlled manner according to the arrangement and degree of overlapping of the flame discharge holes. In addition, flame entering the inner space S of the flame control block 50 can be guided to the venting holes 30 in a more minutely controlled manner.

### (Fifth Embodiment)

FIG. 14 is a schematic view of other examples of a flame control block.

Flame control blocks 50 of the present embodiment are combinations of the flame control block 50 of FIG. 5 and the flame control block of FIGS. 10 and 13.

That is, flame blocking surfaces 51a of the flame control blocks 50 of FIG. 14 have different curvatures and/or slopes and each include at least one partition frame 53 to partition inner spaces S of the flame control blocks 50.

Referring to (a) of FIG. 14, the flame blocking surface 51a of a protruding frame 51 and the partition frame 53 are formed to be concave toward the outside of the battery pack 100, thereby easily guiding flames to the inner space S. In addition, a diameter of flame discharge holes at the center of the flame blocking surface 51a and a diameter of flame discharge holes at the center of the partition frame 53 are set to be respectively less than that of flame discharge holes at both sides of the flame blocking surface 51a and that of flame discharge holes at both sides of the partition frame 53, thereby greatly increasing a flame collection effect.

Referring to (b) of FIG. 14, the flame blocking surface 51a of a protruding frame and the partition frame 53 include a flat part 51a and inclined parts 51a' positioned at both sides of the flat part 51a and inclined from the flat part 51a toward the inside of the battery pack 100. Accordingly, flames may be easily guided to the inner space S of the protruding frame 51. In addition, a diameter of flame discharge holes in the flat part is set to be less than those of flame discharge holes in the inclined part, thereby greatly increasing a flame collection effect. Each of the protruding frames 51 of FIG. 14 includes the partition frame 53 in the inner space S thereof to more easily control a moving path of flames. In this case, flames that are likely to move forward may be easily guided to the venting holes 30 by partially overlapping the flame discharge holes in the protruding frames 51 and the flame discharge holes in the partition frames 53.

Only the flame blocking surface 51a may be manufactured as a concave or inclined surface and at least one partition frame 53 may be manufactured as a flat surface as necessary. According to the above modified example, a volume of the inner space S between the flame blocking surface 51a and the partition frame 53 may be freely adjusted.

As described above, according to the present invention, an area, curvature and slope of the flame blocking surface 51a, a size and number of the flame discharge holes H, a curvature and slope of the partition frame 53, a size and number of flame discharge holes in the partition frame 53, a degree of overlapping of the flame discharge holes in the flame blocking surface 51a and the flame discharge holes in the partition frame 53, a size of the inner space S, etc. can be adjusted. Accordingly, flames generated in the battery pack 100 can be guided to the venting holes 30 in an extremely controlled manner or all or most of the flames can be removed before the flames are guided to the venting holes 30.

### (Reference Numerals)

100: battery pack
10: lower case
11: side wall
12: base plate
13: partition member
14: center frame
20: upper case
21: inner surface of upper case
30: venting hole
40: sealing member
50: flame control block
51: protruding frame
51a: flame blocking surface
51b: side surface of flame control block
V: gas inlet
S: inner space
H: (first flame discharge hole)
52: mounting bracket
53: partition frame
60: mesh-shaped flame extinction member
70: venting device
71: housing
72: hollow venting channel

## Claims

1. A battery pack (100) comprising:
a lower case (10) configured to accommodate a plurality of battery modules therein;
an upper case (20) coupled to the lower case (10) while covering the lower case (10);
venting holes (30) provided in at least one of a side wall (11) of the lower case (10) and the upper case (20);
a sealing member (40) installed on at least one of the side wall (11) of the lower case (10) and the upper case (20) to cover the venting holes (30), and configured to be deformed under predetermined pressure and/or a predetermined temperature or higher to open the venting holes (30); and
a flame control block (50) mounted on at least one of an inner surface of the side wall (11) of the lower case (10) and an inner surface of the upper case (20) to cover the venting holes (30) and the sealing member (40), the flame control block (50) including a flame blocking surface (51a) with a plurality of flame discharge holes (H) and an inner space (S) that communicates with the flame discharge holes (H) and that is open toward the venting holes (30) and the sealing member (40),
wherein
the sealing member (40) is a sheet type member, and
the battery pack (100) further comprises a mesh-shaped flame extinction member (60) installed in venting holes (30) in front surface of the sealing member (40) or in rear surface of the sealing member (40).

2. The battery pack (100) of claim 1, wherein the flame control block (50) comprises a protruding frame (51) protruding toward the inside of the battery pack (100) while surrounding the venting holes (30) and the sealing member (40),
wherein a protruding surface of the protruding frame (51) forms the flame blocking surface (51a), and the inner space (S) is provided among an inner surface of the protruding frame (51), the venting holes (30), and the sealing member (40).

3. The battery pack (100) of claim 2, further comprising a mounting bracket (52) on an end of the protruding frame (51) opposite to the flame blocking surface (51a),
wherein the mounting bracket (52) is mounted on at least one of the inner surface of the side wall (11) of the lower case (10) and the inner surface of the upper case (20).

4. The battery pack (100) of claim 2, wherein a gas inlet (V) is provided at a corner of the protruding frame (51).

5. The battery pack (100) of claim 2, wherein the flame blocking surface (51a) of the protruding frame (51) is formed to be concave toward the outside of the battery pack (100).

6. The battery pack (100) of claim 5, wherein a diameter of a flame discharge hole (H) at a center of the flame blocking surface (51a) is less than those of flame discharge holes (H) at both sides of the flame blocking surface (51a).

7. The battery pack (100) of claim 2, wherein the flame blocking surface (51a) of the protruding frame (51) comprises:
a flat part (51a); and
inclined parts (51a') provided at both sides of the flat part (51a) and inclined toward the inside of the battery pack (100) from the flat part (51a).

8. The battery pack (100) of claim 7, wherein a diameter of a flame discharge hole (H) in the flat part (51a) is less than those of flame discharge holes (H) in the inclined parts (51a').

9. The battery pack (100) of claim 1, further comprising a venting device (70) mounted on at least one of outer sides of the side wall (11) of the lower case (10) and the upper case (20) while covering the venting holes (30),
wherein the venting device (70) comprises:
a housing (71) provided with a hollow venting channel (72) communicating with the venting holes (30); and
a mesh-shaped flame extinction member (60') coupled to an entrance (72a) of the hollow venting channel (72) communicating with the venting holes (30).

10. The battery pack (100) of claim 9, wherein the sealing member (40) is installed in the hollow venting channel (72) of the housing (71).

11. The battery pack (100) of claim 2, wherein the flame control block (50) further comprises at least one partition frame (53) including flame discharge holes (H) communicating with the flame discharge holes (H) in the flame blocking surface (51a), configured to partition the inner space (S), and installed in the protruding frame (51).

12. The battery pack (100) of claim 11, wherein the flame discharge holes (H) in the at least one partition frame (53) is provided to overlap at least some of the flame discharge holes (H) in the flame blocking surface (51a).

13. The battery pack (100) of claim 11, wherein the flame blocking surface (51a) of the protruding frame (51) and the at least one partition frame (53) are formed to be concave toward the outside of the battery pack (100), and
a diameter of the flame discharge hole (H) at the center of the flame blocking surface (51a) and a diameter of a flame discharge hole (H) at a center of the at least one partition frame (53) are less than that of the flame discharge holes (H) in both sides of the flame blocking surface (51a) and that of flame discharge holes (H) at both sides of the at least one partition frame (53), respectively.

14. The battery pack (100) of claim 11, wherein each of the flame blocking surface (51a) of the protruding frame (51) and the at least one partition frame (53) comprises:
a flat part (51a);
and inclined parts (51a') positioned at both sides of the flat part (51a) and inclined toward the inside of the battery pack (100) from the flat part (51a), and
a diameter of a flame discharge hole (H) in the flat part (51a) is less than those of flame discharge holes (H) in the inclined parts (51a').

## Patentansprüche

1. Batteriepack (100), umfassend:
ein unteres Gehäuse (10), das zum Aufnehmen einer Vielzahl von Batteriemodulen darin konfiguriert ist;
ein oberes Gehäuse (20), das mit dem unteren Gehäuse (10) gekoppelt ist, während es das untere Gehäuse (10) abdeckt;
Entlüftungslöcher (30), die in mindestens einer von einer Seitenwand (11) des unteren Gehäuses (10) und des oberen Gehäuses (20) vorgesehen sind;
ein Dichtungselement (40), das an mindestens einer von der Seitenwand (11) des unteren Gehäuses (10) und des oberen Gehäuses (20) installiert ist, um die Entlüftungslöcher (30) abzudecken, und konfiguriert ist, um unter einem vorbestimmten Druck und/oder einer vorbestimmten oder höheren Temperatur verformt zu werden, um die Entlüftungslöcher (30) zu öffnen; und
einen Flammensteuerblock (50), der an mindestens einer von einer Innenfläche der Seitenwand (11) des unteren Gehäuses (10) und einer Innenfläche des oberen Gehäuses (20) montiert ist, um die Entlüftungslöcher (30) und das Dichtungselement (40) abzudecken, wobei der Flammensteuerblock (50) eine Flammensperrfläche (51a) mit einer Vielzahl von Flammenaustrittslöchern (H) und einen Innenraum (S) aufweist, der mit den Flammenaustrittslöchern (H) in Verbindung steht und der in Richtung der Entlüftungslöcher (30) und des Dichtungselements (40) offen ist,
wobei
das Dichtungselement (40) ein folienartiges Element ist, und
der Batteriepack (100) ferner ein gitterförmiges Flammenlöschelement (60) umfasst, das in den Entlüftungslöchern (30) in der Vorderfläche des Dichtungselements (40) oder in der Rückfläche des Dichtungselements (40) installiert ist.

2. Batteriepack (100) nach Anspruch 1, wobei der Flammensteuerblock (50) einen vorstehenden Rahmen (51) umfasst, der zur Innenseite des Batteriepacks (100) hin vorsteht, während er die Entlüftungslöcher (30) und das Dichtungselement (40) umgibt,
wobei eine vorstehende Fläche des vorstehenden Rahmens (51) die Flammensperrfläche (51a) bildet, und der Innenraum (S) zwischen einer Innenfläche des vorstehenden Rahmens (51), den Entlüftungslöchern (30) und dem Dichtungselement (40) vorgesehen ist.

3. Batteriepack (100) nach Anspruch 2, ferner umfassend eine Montagehalterung (52) an einem Ende des vorstehenden Rahmens (51) gegenüber der Flammensperrfläche (51a),
wobei die Montagehalterung (52) an mindestens einer der Innenfläche der Seitenwand (11) des unteren Gehäuses (10) und der Innenfläche des oberen Gehäuses (20) montiert ist.

4. Batteriepack (100) nach Anspruch 2, wobei ein Gaseinlass (V) an einer Ecke des vorstehenden Rahmens (51) vorgesehen ist.

5. Batteriepack (100) nach Anspruch 2, wobei die Flammensperrfläche (51a) des vorstehenden Rahmens (51) so ausgebildet ist, dass sie zur Außenseite des Batteriepacks (100) hin konkav ist.

6. Batteriepack (100) nach Anspruch 5, wobei ein Durchmesser eines Flammenaustrittsloches (H) in der Mitte der Flammensperrfläche (51a) kleiner ist als jene der Flammenaustrittslöcher (H) an beiden Seiten der Flammensperrfläche (51a).

7. Batteriepack (100) nach Anspruch 2, wobei die Flammensperrfläche (51a) des vorstehenden Rahmens (51) umfasst:
einen flachen Teil (51a); und
geneigte Teile (51a'), die an beiden Seiten des flachen Teils (51a) vorgesehen und von dem flachen Teil (51a) zur Innenseite des Batteriepacks (100) hin geneigt sind.

8. Batteriepack (100) nach Anspruch 7, wobei ein Durchmesser eines Flammenaustrittsloches (H) in dem flachen Teil (51a) kleiner ist als jene der Flammenaustrittslöcher (H) in den geneigten Teilen (51a').

9. Batteriepack (100) nach Anspruch 1, ferner umfassend eine Entlüftungsvorrichtung (70), die an mindestens einer der Außenseiten der Seitenwand (11) des unteren Gehäuses (10) und des oberen Gehäuses (20) montiert ist, während sie die Entlüftungslöcher (30) abdeckt,
wobei die Entlüftungsvorrichtung (70) umfasst:
ein Gehäuse (71), das mit einem hohlen Entlüftungskanal (72) versehen ist, der mit den Entlüftungslöchern (30) in Verbindung steht; und
ein gitterförmiges Flammenlöschelement (60'), das mit einem Eingang (72a) des hohlen Entlüftungskanals (72) gekoppelt ist, der mit den Entlüftungslöchern (30) in Verbindung steht.

10. Batteriepack (100) nach Anspruch 9, wobei das Dichtungselement (40) in dem hohlen Entlüftungskanal (72) des Gehäuses (71) installiert ist.

11. Batteriepack (100) nach Anspruch 2, wobei der Flammensteuerblock (50) ferner mindestens einen Trennrahmen (53) umfasst, der Flammenaustrittslöcher (H) aufweist, die mit den Flammenaustrittslöchern (H) in der Flammensperrfläche (51a) in Verbindung stehen, konfiguriert ist, um den Innenraum (S) zu unterteilen, und in dem vorstehenden Rahmen (51) installiert ist.

12. Batteriepack (100) nach Anspruch 11, wobei die Flammenaustrittslöcher (H) in dem mindestens einen Trennrahmen (53) so vorgesehen sind, dass sie mindestens einige der Flammenaustrittslöcher (H) in der Flammensperrfläche (51a) überlappen.

13. Batteriepack (100) nach Anspruch 11, wobei die Flammensperrfläche (51a) des vorstehenden Rahmens (51) und der mindestens eine Trennrahmen (53) so ausgebildet sind, dass sie zur Außenseite des Batteriepacks (100) hin konkav sind, und
ein Durchmesser des Flammenaustrittsloches (H) in der Mitte der Flammensperrfläche (51a) und ein Durchmesser eines Flammenaustrittsloches (H) in der Mitte des mindestens einen Trennrahmens (53) kleiner sind als der der Flammenaustrittslöcher (H) an beiden Seiten der Flammensperrfläche (51a) bzw. der der Flammenaustrittslöcher (H) an beiden Seiten des mindestens einen Trennrahmens (53).

14. Batteriepack (100) nach Anspruch 11, wobei jede der Flammensperrfläche (51a) des vorstehenden Rahmens (51) und des mindestens einen Trennrahmens (53) umfasst:
einen flachen Teil (51a);
und geneigte Teile (51a'), die an beiden Seiten des flachen Teils (51a) positioniert und vom flachen Teil (51a) zur Innenseite des Batteriepacks (100) hin geneigt sind, und
ein Durchmesser eines Flammenaustrittsloches (H) in dem flachen Teil (51a) kleiner ist als jene von Flammenaustrittslöchern (H) in den geneigten Teilen (51a').

## Revendications

1. Un bloc-batterie (100) comprenant :
un boîtier inférieur (10) configuré pour recevoir une pluralité de modules de batterie à l'intérieur de celui-ci ;
un boîtier supérieur (20) couplé au boîtier inférieur (10) tout en recouvrant le boîtier inférieur (10) ;
des trous d'aération (30) prévus dans au moins l'une d'une paroi latérale (11) du boîtier inférieur (10) et du boîtier supérieur (20) ;
un élément d'étanchéité (40) installé sur au moins l'une de la paroi latérale (11) du boîtier inférieur (10) et du boîtier supérieur (20) pour recouvrir les trous d'aération (30),
et configuré pour être déformé sous une pression prédéterminée et/ou une température prédéterminée ou supérieure pour ouvrir les trous d'aération (30) ; et
un bloc de contrôle de flamme (50) monté sur au moins l'une d'une surface intérieure de la paroi latérale (11) du boîtier inférieur (10) et d'une surface intérieure du boîtier supérieur (20) pour recouvrir les trous d'aération (30) et l'élément d'étanchéité (40), le bloc de contrôle de flamme (50) incluant une surface de blocage de flamme (51a) avec une pluralité de trous d'évacuation de flamme (H) et un espace intérieur (S) qui communique avec les trous d'évacuation de flamme (H) et qui est ouvert vers les trous d'aération (30) et l'élément d'étanchéité (40),
dans lequel
l'élément d'étanchéité (40) est un élément de type feuille, et
le bloc-batterie (100) comprend en outre un élément d'extinction de flamme en forme de treillis (60) installé dans les trous d'aération (30) dans la surface avant de l'élément d'étanchéité (40) ou dans la surface arrière de l'élément d'étanchéité (40).

2. Le bloc-batterie (100) selon la revendication 1, dans lequel le bloc de contrôle de flamme (50) comprend un cadre saillant (51) faisant saillie vers l'intérieur du bloc-batterie (100) tout en entourant les trous d'aération (30) et l'élément d'étanchéité (40), dans lequel une surface saillante du cadre saillant (51) forme la surface de blocage de flamme (51a), et l'espace intérieur (S) est prévu entre une surface intérieure du cadre saillant (51), les trous d'aération (30), et l'élément d'étanchéité (40).

3. Le bloc-batterie (100) selon la revendication 2, comprenant en outre un support de montage (52) sur une extrémité du cadre saillant (51) opposée à la surface de blocage de flamme (51a),
dans lequel le support de montage (52) est monté sur au moins l'une de la surface intérieure de la paroi latérale (11) du boîtier inférieur (10) et de la surface intérieure du boîtier supérieur (20).

4. Le bloc-batterie (100) selon la revendication 2, dans lequel une entrée de gaz (V) est prévue à un coin du cadre saillant (51).

5. Le bloc-batterie (100) selon la revendication 2, dans lequel la surface de blocage de flamme (51a) du cadre saillant (51) est formée pour être concave vers l'extérieur du bloc-batterie (100).

6. Le bloc-batterie (100) selon la revendication 5, dans lequel un diamètre d'un trou d'évacuation de flamme (H) au centre de la surface de blocage de flamme (51a) est inférieur à ceux des trous d'évacuation de flamme (H) des deux côtés de la surface de blocage de flamme (51a).

7. Le bloc-batterie (100) selon la revendication 2, dans lequel la surface de blocage de flamme (51a) du cadre saillant (51) comprend :
une partie plate (51a) ; et
des parties inclinées (51a') prévues des deux côtés de la partie plate (51a) et inclinées vers l'intérieur du bloc-batterie (100) à partir de la partie plate (51a).

8. Le bloc-batterie (100) selon la revendication 7, dans lequel un diamètre d'un trou d'évacuation de flamme (H) dans la partie plate (51a) est inférieur à ceux des trous d'évacuation de flamme (H) dans les parties inclinées (51a').

9. Le bloc-batterie (100) selon la revendication 1, comprenant en outre un dispositif d'aération (70) monté sur au moins l'un des côtés extérieurs de la paroi latérale (11) du boîtier inférieur (10) et du boîtier supérieur (20) tout en recouvrant les trous d'aération (30),
dans lequel le dispositif d'aération (70) comprend :
un logement (71) pourvu d'un canal d'aération creux (72) communiquant avec les trous d'aération (30) ; et
un élément d'extinction de flamme en forme de treillis (60') couplé à une entrée (72a) du canal d'aération creux (72) communiquant avec les trous d'aération (30).

10. Le bloc-batterie (100) selon la revendication 9, dans lequel l'élément d'étanchéité (40) est installé dans le canal d'aération creux (72) du logement (71).

11. Le bloc-batterie (100) selon la revendication 2, dans lequel le bloc de contrôle de flamme (50) comprend en outre au moins un cadre de séparation (53) incluant des trous d'évacuation de flamme (H) communiquant avec les trous d'évacuation de flamme (H) dans la surface de blocage de flamme (51a), configuré pour cloisonner l'espace intérieur (S), et installé dans le cadre saillant (51).

12. Le bloc-batterie (100) selon la revendication 11, dans lequel les trous d'évacuation de flamme (H) dans le au moins un cadre de séparation (53) sont prévus pour chevaucher au moins une partie des trous d'évacuation de flamme (H) dans la surface de blocage de flamme (51a).

13. Le bloc-batterie (100) selon la revendication 11, dans lequel la surface de blocage de flamme (51a) du cadre saillant (51) et le au moins un cadre de séparation (53) sont formés pour être concaves vers l'extérieur du bloc-batterie (100), et
un diamètre du trou d'évacuation de flamme (H) au centre de la surface de blocage de flamme (51a) et un diamètre d'un trou d'évacuation de flamme (H) au centre du au moins un cadre de séparation (53) sont inférieurs à celui des trous d'évacuation de flamme (H) des deux côtés de la surface de blocage de flamme (51a) et à celui des trous d'évacuation de flamme (H) des deux côtés du au moins un cadre de séparation (53), respectivement.

14. Le bloc-batterie (100) selon la revendication 11, dans lequel chacune de la surface de blocage de flamme (51a) du cadre saillant (51) et du au moins un cadre de séparation (53) comprend :
une partie plate (51a) ;
et des parties inclinées (51a') positionnées des deux côtés de la partie plate (51a) et inclinées vers l'intérieur du bloc-batterie (100) à partir de la partie plate (51a), et
un diamètre d'un trou d'évacuation de flamme (H) dans la partie plate (51a) est inférieur à ceux des trous d'évacuation de flamme (H) dans les parties inclinées (51a').
